(19)

Europäisches
Patentamt
European
Patent Office
Office européen
des brevets

(11) **EP 4 231 402 A1**

(12) **EUROPEAN PATENT APPLICATION**
published in accordance with Art. 153(4) EPC

(43) Date of publication:
**23.08.2023 Bulletin 2023/34**

(21) Application number: **21882823.4**

(22) Date of filing: **19.10.2021**

(51) International Patent Classification (IPC):
$H01M\ 10/052^{(2010.01)}$    $H01M\ 10/058^{(2010.01)}$
$H01M\ 50/107^{(2021.01)}$    $H01M\ 50/109^{(2021.01)}$
$H01M\ 50/119^{(2021.01)}$    $H01M\ 50/152^{(2021.01)}$
$H01M\ 50/153^{(2021.01)}$    $H01M\ 50/159^{(2021.01)}$
$H01M\ 50/342^{(2021.01)}$    $H01M\ 50/545^{(2021.01)}$
$H01M\ 50/559^{(2021.01)}$    $H01M\ 50/56^{(2021.01)}$
$H01M\ 50/562^{(2021.01)}$    $H01M\ 50/588^{(2021.01)}$
$H01M\ 50/593^{(2021.01)}$

(52) Cooperative Patent Classification (CPC):
H01M 10/052; H01M 10/058; H01M 50/107;
H01M 50/109; H01M 50/119; H01M 50/152;
H01M 50/153; H01M 50/159; H01M 50/342;
H01M 50/545; H01M 50/559; H01M 50/56;
H01M 50/562; H01M 50/588; H01M 50/593;

(Cont.)

(86) International application number:
**PCT/JP2021/038626**

(87) International publication number:
**WO 2022/085682 (28.04.2022 Gazette 2022/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.10.2020 JP 2020175351**

(71) Applicant: **Murata Manufacturing Co., Ltd.
Nagaokakyo-shi, Kyoto 617-8555 (JP)**

(72) Inventors:
• **MINAMISHIMA, Yasuhito
Nagaokakyo-shi, Kyoto 617-8555 (JP)**

• **AKIZUKI, Naoto
Nagaokakyo-shi, Kyoto 617-8555 (JP)**
• **EGUCHI, Kenta
Nagaokakyo-shi, Kyoto 617-8555 (JP)**
• **ISHIHAMA, Kazuya
Nagaokakyo-shi, Kyoto 617-8555 (JP)**
• **TANIDA, Masayoshi
Nagaokakyo-shi, Kyoto 617-8555 (JP)**

(74) Representative: **Witte, Weller & Partner
Patentanwälte mbB
Postfach 10 54 62
70047 Stuttgart (DE)**

(54) **SECONDARY BATTERY**

(57)    Provided is a secondary battery including an electrode assembly and an exterior body that houses the electrode assembly. In the secondary battery, the exterior body is provided with a flat plate-shaped terminal joined to the exterior body with an insulating member interposed therebetween, the flat plate-shaped terminal includes a first terminal member and a second terminal member, the first terminal member and the second terminal member are formed from materials that have different linear expansion coefficients from each other, and the first terminal member and the second terminal member are stacked on each other such that the first terminal member is stacked on the second terminal member, and the flat plate-shaped terminal is disposed on the insulating member such that the second terminal member faces the insulating member.

FIG. 1

(A)

(B)

(52) Cooperative Patent Classification (CPC): (Cont.)
Y02E 60/10; Y02P 70/50

## Description

TECHNICAL FIELD

The present invention relates to a secondary battery. Specifically, the present invention relates to a secondary battery including an electrode assembly including an electrode-constituting layer including a positive electrode, a negative electrode, and a separator.

BACKGROUND ART

Secondary batteries can be repeatedly charged and discharged because the secondary batteries are a so-called "storage batteries", and are used for various applications. For example, secondary batteries are used for mobile devices such as mobile phones, smart phones, and laptop computers.

PRIOR ART DOCUMENT

PATENT DOCUMENTS

Patent Document 1: Japanese Patent Application Laid-Open No. 2019-46639
Patent Document 2: Japanese Patent Application Laid-Open No. 2020-47536

SUMMARY OF THE INVENTION

Problem to be solved by the invention

The inventor of the present application has noticed that there is a problem to be overcome in the previously secondary battery, and has found a need to take measures therefor. Specifically, the inventor of the present application has found that there are the following problems.

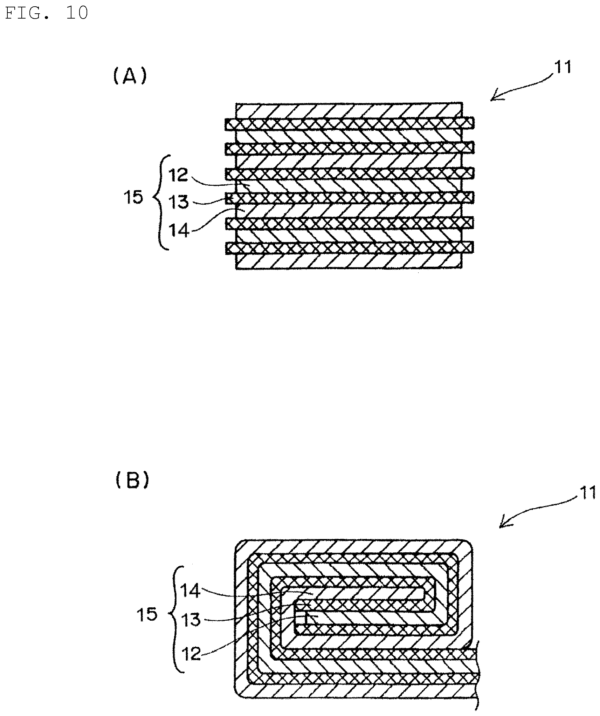

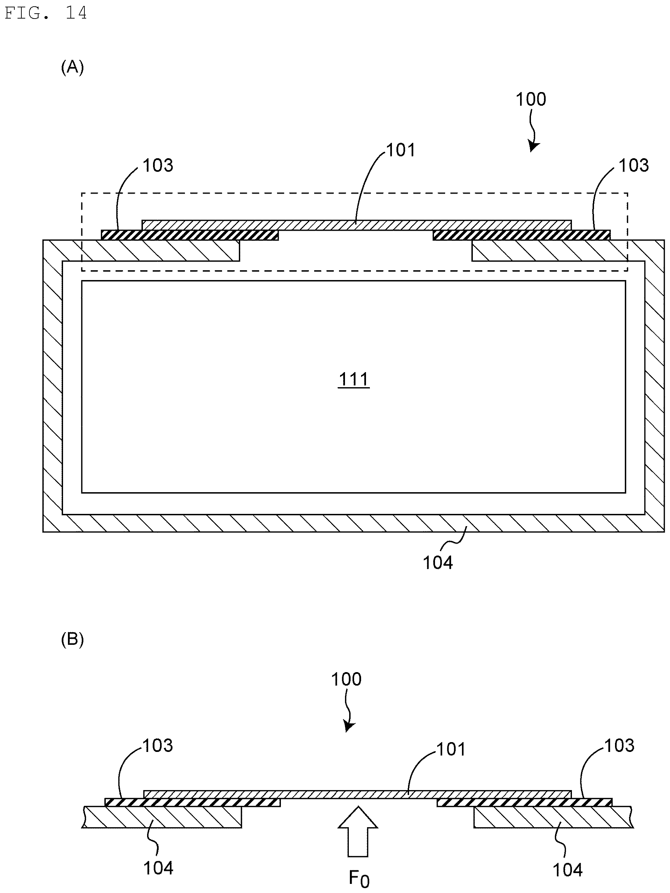

For example, Patent Document 1 discloses a sealed battery that has a sealing structure. For example, as shown in FIG. 14, in a conventional sealed battery 100, for example, an electrode assembly 111 (see FIG. 10) obtained by stacking or winding a positive electrode and a negative electrode with a separator interposed therebetween is housed in an exterior case 104. So as to cover an opening of the exterior case 104, a flat plate-shaped electrode terminal member 101 is bonded to the surface of the exterior case 104 with an insulating and adhesive sealing member 103 interposed therebetween. For example, for the battery 100 shown in FIG. 14, the sealing property of the battery is secured by such a sealing structure with the use of the flat plate-shaped electrode terminal member 101 and the sealing member 103. In this regard, with the increased area of the region where the flat plate-shaped electrode terminal member 101 is bonded to the sealing member 103, the sealing property of the battery is improved.

In the battery 100 shown in FIG. 14, the flat plate-shaped electrode terminal member 101 and the electrode assembly 111 are electrically connected via a lead body or the like, but for convenience of description, the description of the lead body is omitted in FIG. 14.

For the conventional battery 100 as shown in FIG. 14, the sealing property of the battery is improved by the sealing structure with the use of the flat plate-shaped electrode terminal member 101 and the sealing member 103 (see FIG. 14A).

Gas is, however, generated inside the battery due to the rise in temperature or heat generation caused by abnormal charge-discharge or the like, the gas presses the flat plate-shaped electrode terminal member 101, for example, with a force ($F_0$) along the arrow, thereby increasing the pressure inside the battery, and as a result, the battery may be ruptured and broken (see FIG. 14B). Accordingly, such a battery is required to secure higher safety as well as sealability.

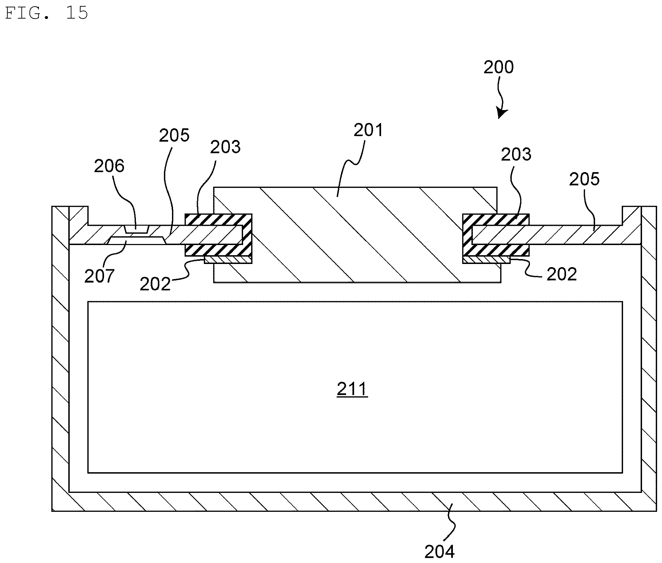

For securing higher safety, for example, Patent Document 2 discloses a sealed battery including an explosion-proof valve and the like. For example, as shown in FIG. 15, an electrode assembly 211 (see FIG. 10B) obtained by winding a positive electrode and a negative electrode with a separator interposed therebetween is housed in a battery body 204, and a sealing plate 205 is provided so as to close an opening of the battery body 204. An external terminal 201 is fixed to the sealing plate 205 with an insulating gasket 203 and a washer 202 interposed therebetween. More specifically, the sealing plate 205 has the external terminal 201 with a crimped structure. Furthermore, the sealing plate 205 is provided with two grooves, that is, a first groove 206 and a second groove 207 so as to face each other, thereby forming a thin part such that the sealing plate 205 is, at a part thereof, reduced in thickness. When the pressure inside the battery is increased, the thin part of the sealing plate 205 is broken to cause the sealing plate 205 to function as an explosion-proof valve, thereby decreasing the pressure inside the battery.

For example, in the conventional battery 200 shown in FIG. 15, the external terminal 201 and the electrode assembly 211 are electrically connected via a lead body or the like, but for convenience of description, the description of the lead body is omitted in FIG. 15.

In the conventional battery 200 shown in FIG. 15, the increase in pressure inside the battery can be suppressed by the explosion-proof valve. The configuration with such an explosion-proof valve used is, however, complicated, thus increasing the manufacturing cost thereof. In addition, for the battery 200 with such an explosion-proof valve used, the sealing plate 205 has to be provided with the first groove 206 and the second groove 207, and the degree of freedom in design is thus decreased with the secured region for such grooves. In addition, in the conventional battery 200 illustrated in FIG. 15, the external terminal 201 erodes a space in which the electrode assembly 211 is disposed, thus decreasing the volume energy density of the battery. In addition, a dead space is produced inside the battery.

Then, the inventor of the present application has studied reducing the pressure by cleaving the sealing part when the pressure inside the battery is increased due to an abnormal rise in temperature, for example, in the conventional battery 100 as shown in FIG. 14. More specifically, the inventor has studied cleaving the sealing part by separating the flat plate-shaped electrode terminal member 101 from the sealing member 103.

As a result of the studies, it has been found that when the pressure inside the battery is increased due to an abnormal rise in temperature, the flat plate-shaped electrode terminal member 101 is preferably separated from the sealing member 103 at a lower pressure. It has also been, however, found that in order to enhance the sealing property of the battery, the bonded area between the flat plate-shaped electrode terminal member 101 and the sealing member 103 has to be increased to secure the sealing property. More specifically, a trade-off relationship between securing the sealing property of the battery and cleaving the sealing part has been found. As described above, the studies by the inventor of the present application have demonstrated, for the first time, that it is difficult to cleave the sealing part at a lower pressure when the internal pressure is increased due to an abnormal rise in temperature, while securing the sealing property of the battery.

The present invention has been devised in view of such problems. More specifically, a main object of the present invention is to provide a secondary battery in which a sealing part is cleaved at a lower pressure when the internal pressure is increased due to an abnormal rise in temperature, while securing the sealing property.

Means for solving the problem

The inventors have attempted to solve the above problems by addressing the problems in a new direction instead of addressing the problems in an extension of the conventional technique. As a result, the present inventor has reached the invention of a secondary battery in which the above main object has been achieved.

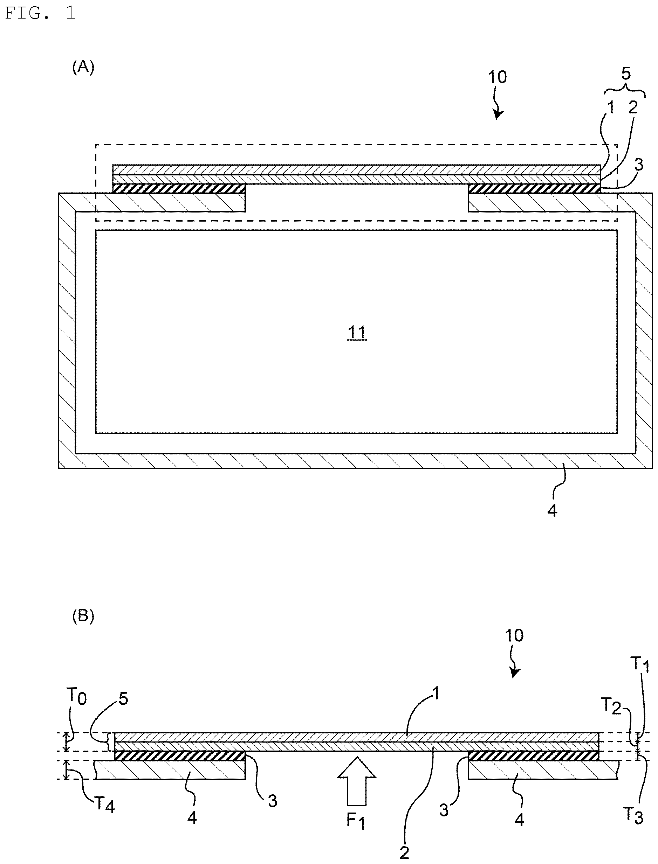

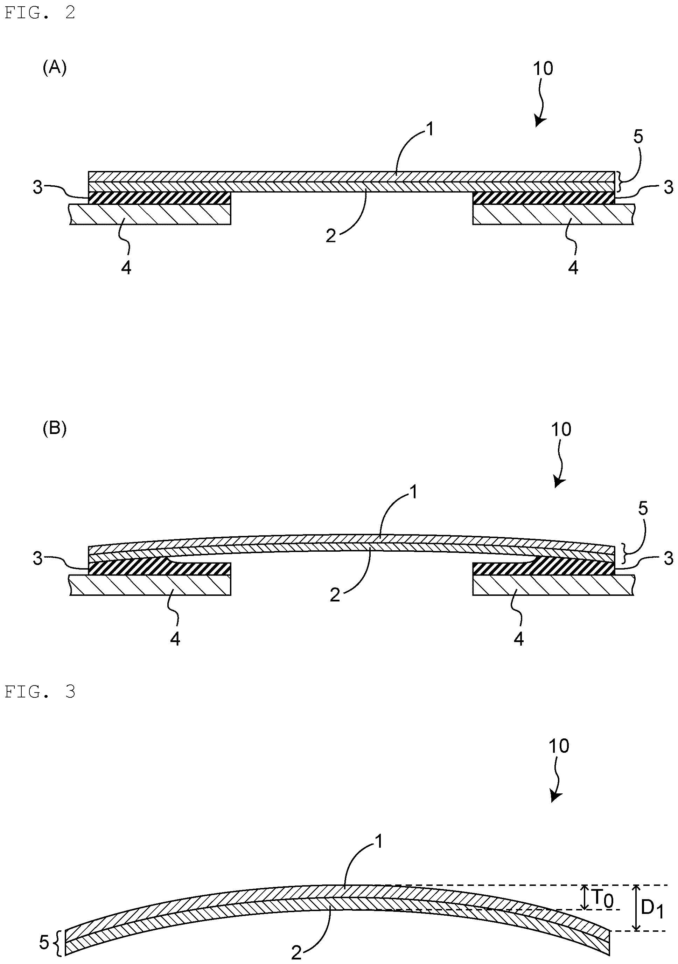

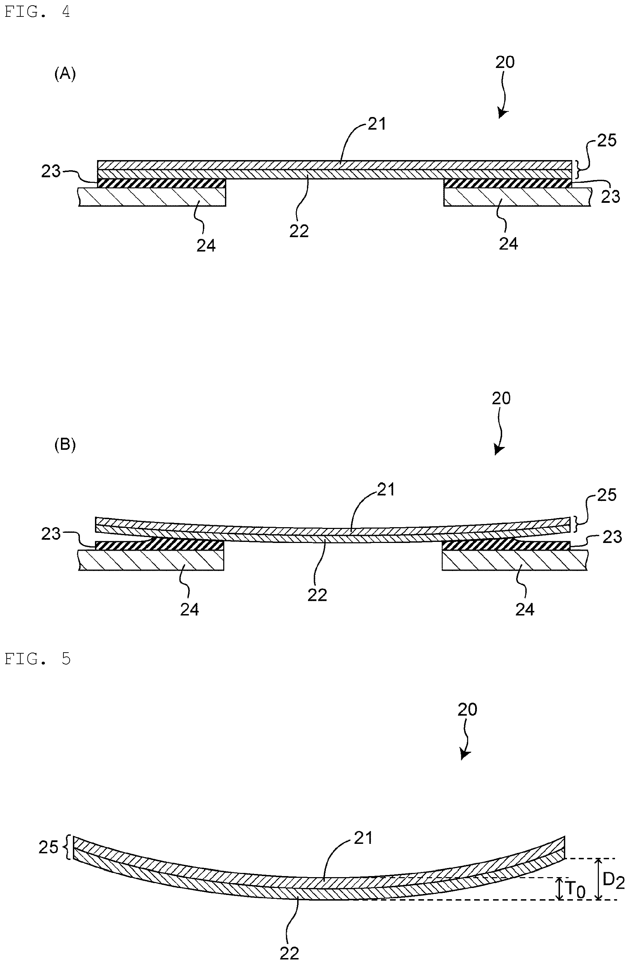

Specifically, for a sealing part that can be formed from an exterior body for the secondary battery, a flat plate-shaped terminal, and an insulating member, the flat plate-shaped terminal has been formed from at least two types of materials that differ in linear expansion coefficient to devise a configuration where the flat plate-shaped terminal can be deformed and warped when the battery abnormally rises in temperature (see more specifically FIGS. 1 to 5, particularly FIGS. 2B and 4B). Such a configuration has been considered allowing the sealing property of the battery to be secured in a normal temperature range, and allowing at least a part of the flat plate-shaped terminal to be separated from the insulating member by warping the flat plate-shaped terminal in the case of an abnormal rise in temperature (see FIGS. 2B and 4B), and such separation has been considered capable of cleaving the sealing part at a lower pressure to reduce the pressure inside the battery.

The present invention provides a secondary battery including an electrode assembly and an exterior body that houses the electrode assembly. In the secondary battery, the exterior body is provided with a flat plate-shaped terminal joined to the exterior body with an insulating member interposed therebetween, the flat plate-shaped terminal includes a first terminal member and a second terminal member, the first terminal member and the second terminal member are formed from materials that have different linear expansion coefficients from each other, and the first terminal member and the second terminal member are stacked on each other such that the first terminal member is stacked on the second terminal member, and the flat plate-shaped terminal is disposed on the insulating member such that the second terminal member faces the insulating member.

Advantageous effect of the invention

The present invention provides a secondary battery in which a sealing part is cleaved at a lower pressure when the internal pressure is increased due to an abnormal rise in temperature, while securing the sealing property. It is to be noted that the effects described in the present specification are considered by way of example only, and are not to be considered limited, and additional effects may be provided.

BRIEF EXPLANATION OF DRAWINGS

FIG. 1 is a schematic view schematically illustrating a section of a secondary battery according to an embodiment of the present disclosure.
FIG. 2 is a schematic view schematically illustrating the structure of a sealing part of a secondary battery according to an embodiment of the present disclosure.
FIG. 3 is a schematic view schematically illustrating a warped flat plate-shaped terminal of a secondary battery according to an embodiment of the present disclosure.
FIG. 4 is a schematic view schematically illustrating the structure of a sealing part of a secondary battery according to another embodiment of the present disclosure.
FIG. 5 is a schematic view schematically illustrating a warped flat plate-shaped terminal of a secondary battery according to another embodiment of the present disclosure.
FIG. 6 is a schematic view schematically illustrating the structure of a sealing part of a secondary battery according to another embodiment of the present disclosure.

FIG. 7 is a schematic view schematically illustrating the structure of a sealing part of a secondary battery according to yet another embodiment of the present disclosure.

FIG. 8 is a schematic view schematically illustrating an enlarged part of the structure of a sealing part of a secondary battery according to yet another embodiment of the present disclosure.

FIG. 9 is a schematic view schematically illustrating an enlarged part of a warped flat plate-shaped terminal of a secondary battery according to yet another embodiment of the present disclosure.

FIG. 10 is a sectional view schematically illustrating the configuration of an electrode assembly.

FIG. 11 is a perspective view schematically illustrating a secondary battery that has a button shape or a coin shape (a) and an angular shape (b).

FIG. 12 shows a result of simulating warpage of a flat plate-shaped terminal in the case of a rise in temperature.

FIG. 13 is a graph showing a relationship between a "bonded area" and a "cleavage pressure".

FIG. 14 is a schematic view schematically illustrating a conventional battery.

FIG. 15 is a schematic view schematically illustrating another conventional battery.

MODE FOR CARRYING OUT THE INVENTION

The present disclosure relates to a secondary battery, and specifically to a secondary battery including an electrode assembly and an exterior body capable of housing the electrode assembly. In the secondary battery according to the present disclosure, the exterior body may be provided with a flat plate-shaped terminal joined with an insulating member interposed therebetween. The flat plate-shaped terminal includes a first terminal member and a second terminal member. The first terminal member and the second terminal member are formed from materials that have different linear expansion coefficients from each other. The first terminal member and the second terminal member are stacked on each other such that the first terminal member is stacked on the second terminal member. The flat plate-shaped terminal is disposed on the insulating member such that the second terminal member faces the insulating member.

In the present disclosure, the secondary battery mentioned above may be referred to as "a secondary battery according to the present disclosure" or "a battery according to the present disclosure", or abbreviated simply as "a secondary battery" or "a battery".

For example, as shown in FIG. 1, for a secondary battery 10 according to an embodiment of the present disclosure, a flat plate-shaped terminal 5 including a first terminal member 1 and a second terminal member 2 is coupled or bonded to an exterior body 4 with an insulating member 3 interposed therebetween. As described in detail below, the insulating member 3 may have: an insulating property; and adhesiveness or fusibility. The exterior body 4 may be a metal exterior body with conductivity.

The first terminal member 1 and the second terminal member 2 that can be included in the flat plate-shaped terminal 5 may each have conductivity, for the function of the flat plate-shaped terminal 5 as an electrode terminal. The first terminal member 1 and the second terminal member 2 may be each made of a material containing a metal and/or an alloy. The first terminal member 1 and the second terminal member 2 may each have a plate shape.

The first terminal member 1 and the second terminal member 2 are formed from materials that have different linear expansion coefficients. The first terminal member 1 and the second terminal member 2 that have different linear expansion coefficients from each other as described above are stacked and disposed, for example, coupled to each other by means such as joining (see FIGS. 2A and 4A), thereby allowing the flat plate-shaped terminal 5 to deform and then "warp", for example, in the case of an abnormal rise in the temperature of the battery (see FIGS. 2B and 4B).

Such warpage of the flat plate-shaped terminal 5 in the case of a rise in temperature allows, for example, as shown in FIG. 2B, at least a part of the flat plate-shaped terminal 5, particularly the second terminal member 2 to be separated from the insulating member 3. As described above, a part of the flat plate-shaped terminal 5 is separated from the insulating member 3, thereby allowing the sealing part to be cleaved at a lower pressure.

In addition, in a normal temperature range, for example, at ordinary temperatures or ambient temperatures, a more sufficient sealing property can be secured. As described above, the battery according to the present disclosure is capable of cleaving the sealing part at a lower pressure when the internal pressure is increased due to an abnormal rise in temperature, while securing the sealing property.

For the battery according to the present disclosure, the space inside the battery can also be effectively utilized, because the flat plate-shaped terminal is disposed on the outer surface of the exterior body. Furthermore, the volume energy density of the battery can be improved. In addition, the manufacturing cost of the battery can be reduced, because no crimped structure or the like is used for the battery according to the present disclosure.

Hereinafter, a secondary battery according to an embodiment of the present invention will be described in more detail. Although the description will be made with reference to the drawings if necessary, various elements in the drawings are only schematically and exemplarily illustrated for the understanding of the present invention, and appearances and/or dimensional ratios may be different from actual ones.

The term "sectional view" directly or indirectly described in the present specification is based on, for example, a virtual section obtained by arbitrarily cutting the secondary battery. Similarly, the direction of the term "thickness" directly or indirectly described in the present specification corresponds to the plate thickness direction of the secondary battery, for example, in the case of a "secondary battery with a thickness in a plate shape" in a button shape, a coin shape, or the like. The "planar view" or "planar view shape" used in this specification is based on a sketch drawing when an object is viewed from the upper side or the lower side in the thickness direction.

In addition, the "up-down direction" and "left-right direction" directly or indirectly used in the present specification may correspond respectively to an up-down direction and a left-right direction in the drawings. Unless otherwise specified, the same reference signs or symbols denote the same members and/or sites, or the same semantic contents. In a preferred aspect, it can be understood that a downward direction in a vertical direction (that is, a direction in which gravity acts) corresponds to a "downward direction", and an opposite direction corresponds to an "upward direction".

Hereinafter, the basic configuration of the battery will be described, and then, features of the battery according to the present disclosure will be described in detail.

[Basic Configuration of Battery]

The term "secondary battery" as used in the present specification refers to a battery that can be repeatedly charged and discharged. Accordingly, the secondary battery according to the present disclosure is not excessively limited by its name, and for example, an electric storage device and the like can also be included in the subject of the present disclosure.

The secondary battery according to the present disclosure includes an electrode assembly obtained by stacking at least one electrode-constituting layer including a positive electrode (or a positive electrode body), a negative electrode (or a negative electrode body), and a separator. For example, FIGS. 10(A) and 10(B) schematically illustrate typical electrode assemblies 11 that can be used in the present disclosure. As illustrated in the figures, a positive electrode 12 and a negative electrode 14 are stacked with a separator 13 interposed therebetween to form an electrode-constituting layer 15. The electrode assembly 11 is composed of at least one or more electrode-constituting layers 15 stacked. FIG. 10(A) has a planar stacked structure in which the electrode-constituting layers 15 are stacked in a planar form. In contrast, FIG. 10(B) has a wound stacked structure in which the electrode-constituting layer 15 is wound in a wound shape. More specifically, FIG. 10(B) has a wound stacked structure in which the electrode-constituting layer 15 including a positive electrode, a negative electrode, and a separator disposed between the positive electrode and the negative electrode is wound in a roll form. For the secondary battery according to the present disclosure, such an electrode assembly is enclosed together with an electrolyte (for example, a non-aqueous electrolyte) in an exterior body. It is to be noted that the structure of the electrode assembly is not necessarily limited to the planar stacked structure or the wound stacked structure. For example, the electrode assembly may have a so-called stack-and-folding type structure in which the positive electrode, the separator, and the negative electrode are stacked on a long film and then folded.

The positive electrode is composed of at least a positive electrode material layer and, if necessary, a positive electrode current collector. For the positive electrode, for example, a positive electrode material layer is provided on at least one surface of a positive electrode current collector. The positive electrode material layer contains a positive electrode active material as an electrode active material. For example, for each of the plurality of positive electrodes in the electrode assembly, the positive electrode material layer may be provided on both sides of the positive electrode current collector, or may be provided only on one side of the positive electrode current collector.

The negative electrode is composed of at least a negative electrode material layer and, if necessary, a negative electrode current collector. For the negative electrode, for example, a negative electrode material layer is provided on at least one surface of a negative electrode current collector. The negative electrode material layer contains a negative electrode active material as an electrode active material. For example, for each of the plurality of negative electrodes in the electrode assembly, the negative electrode material layer may be provided on both sides of the negative electrode current collector, or may be provided only on one surface of the negative electrode current collector.

The electrode active materials that can be included in the positive electrode and the negative electrode, that is, the positive electrode active material and the negative electrode active material, are materials that can be directly involved in the transfer of electrons in the secondary battery, and are main materials in the positive electrode and the negative electrode that are responsible for charge-discharge, that is, the battery reaction. More specifically, ions are brought into the electrolyte due to "the positive electrode active material that can be included in the positive electrode material layer" and "the negative electrode active material that can be included in the negative electrode material layer", and such ions can move between the positive electrode and the negative electrode to transfer electrons, thereby leading to charge-discharge. The positive electrode material layer and the negative electrode material layer may be layers particularly capable of occluding and releasing lithium ions. More specifically, the secondary battery according to the present disclosure may be a non-aqueous electrolyte secondary battery in which lithium ions can move between the positive electrode and the negative electrode through a non-aqueous electrolyte to charge and discharge the battery. When lithium ions are involved in charge-discharge, the secondary battery according to the present invention corresponds to a so-called "lithium ion battery", and the positive electrode and the negative electrode include a layer capable of occluding and releasing lithium ions.

The positive electrode active material of the positive electrode material layer can be composed of, for example, a particulate material, and a binder may be included in the positive electrode material layer for more sufficient contact between the particles and shape retention. Furthermore, a conductive auxiliary agent may be included in the positive electrode material layer to facilitate the transfer of electrons that promote the battery reaction. Similarly, the negative electrode active material of the negative electrode material layer can be composed of, for example, a particulate material, and a binder may be included in the negative electrode material layer for more sufficient contact between the particles and shape retention. Furthermore, a conductive auxiliary agent may be included in the negative electrode material layer to facilitate the transfer of electrons that promote the battery reaction.

The positive electrode material layer and the negative electrode material layer can, because of containing the multiple components as described above, also be referred to respectively as a "positive electrode mixture layer" and a "negative electrode mixture layer".

The positive electrode active material may be a material that contributes to occlusion and release of lithium ions. From such a viewpoint, the positive electrode active material may be, for example, a lithium-containing composite oxide. More specifically, the positive electrode active material may be a lithium-transition metal composite oxide containing lithium and at least one transition metal selected from the group consisting of cobalt, nickel, manganese, and iron. More specifically, in the positive electrode material layer of the secondary battery according to the present disclosure, such a lithium-transition metal composite oxide may be included as the positive electrode active material. For example, the positive electrode active material may be a lithium cobaltate, a lithium nickelate, a lithium manganate, a lithium iron phosphate, or a material obtained by replacing a part of the transition metal thereof with another metal. Such a positive electrode active material may be included as a single species, or two or more species may be included in combination.

The binder that can be included in the positive electrode material layer is not particularly limited, and examples thereof include polymer compounds. Specific examples thereof include at least one selected from the group consisting of a styrene-butadiene-based rubber, a polyacrylic acid, a polyimide-based resin, a polyamideimide-based resin, a polyvinylidene fluoride, a vinylidene fluoride-hexafluoropropylene copolymer, a vinylidene fluoride-tetrafluoroethylene copolymer, and a polytetrafluoroethylene.

The conductive auxiliary agent that can be included in the positive electrode material layer is not particularly limited, and examples thereof can include at least one selected from carbon black such as thermal black, furnace black, channel black, ketjen black, and acetylene black, carbon fibers such as graphite, carbon nanotubes, and vapor-grown carbon fibers, metal powders such as copper, nickel, aluminum, and silver, and polyphenylene derivatives.

The thickness dimension of the positive electrode material layer is not particularly limited, and may be 1 um or more and 300 um or less, and is, for example, 5 um or more and 200 um or less. The thickness dimension of the positive electrode material layer is a thickness inside the secondary battery, and the average value of measured values at random 10 points may be employed.

The negative electrode active material may be a material that contributes to occlusion and release of lithium ions. From such a viewpoint, the negative electrode active material may be, for example, various carbon materials, oxides, lithium alloys, and/or lithium metals.

Examples of various carbon materials for the negative electrode active material can include graphite (natural graphite and/or artificial graphite), hard carbon, soft carbon, and/or diamond-like carbon. In particular, graphite is high in electron conductivity and is excellent in adhesiveness to, for example, a negative electrode current collector.

Examples of the oxides for the negative electrode active material include at least one selected from the group consisting of a silicon oxide, a tin oxide, an indium oxide, a zinc oxide, and a lithium oxide.

The lithium alloy for the negative electrode active material may be any alloy of lithium and a metal that can be alloyed with lithium, and may be, for example, a binary, ternary, or higher alloy of lithium and a metal such as Al, Si, Pb, Sn, In, Bi, Ag, Ba, Ca, Hg, Pd, Pt, Te, Zn, and La. Such an oxide may be amorphous as its structural form. This is because deterioration due to nonuniformity such as crystal grain boundaries or defects is less likely to be caused.

The binder that can be included in the negative electrode material layer is not particularly limited, and examples thereof include a polymer compound. Specific examples thereof include at least one selected from the group consisting of a styrene-butadiene-based rubber, a polyacrylic acid, a polyimide-based resin, a polyamideimide-based resin, a polyvinylidene fluoride, a vinylidene fluoride-hexafluoropropylene copolymer, a vinylidene fluoride-tetrafluoroethylene copolymer, and a polytetrafluoroethylene.

The conductive auxiliary agent that can be included in the negative electrode material layer is not particularly limited, and examples thereof can include at least one selected from carbon black such as thermal black, furnace black, channel black, ketjen black, and acetylene black, carbon fibers such as graphite, carbon nanotubes, and vapor-grown carbon fibers, metal powders such as copper, nickel, aluminum, and silver, and polyphenylene derivatives.

The thickness dimension of the negative electrode material layer is not particularly limited, but may be 1 um or more and 300 um or less, and is, for example, 5 um or more and 200 um or less. The thickness dimension of the negative electrode material layer is a thickness inside the secondary battery, and the average value of measured values at random 10 points may be employed.

The positive electrode current collector and the negative electrode current collector that can be used for the positive electrode and the negative electrode are members that contribute to collecting and supplying electrons generated in the electrode active materials due to the battery reaction. Such an electrode current collector may be a sheet-shaped metal member. In addition, the electrode current collector may have a porous or perforated form. For example, the electrode current collector may be a metal foil, a punching metal, a net, an expanded metal, or the like. The positive electrode current collector that can be used for the positive electrode may be made of a metal foil containing at least one selected from the group consisting of aluminum, stainless steel (SUS), nickel, and the like, and may be, for example, an aluminum foil. In contrast, the negative electrode current collector that can be used for the negative electrode may be made of a metal foil containing at least one selected from the group consisting of copper, stainless steel (SUS), nickel, and the like, and may be, for example, a copper foil.

In the present disclosure, "stainless steel" (SUS) refers to, for example, stainless steel defined in "JIS G0203 Glossary of terms used in iron and steels" and may be alloy steel containing chromium or containing chromium and nickel.

The thickness dimension of each of the positive electrode current collector and the negative electrode current collector is not particularly limited, and may be 1 um or more and 100 um or less, and is, for example, 10 um or more and 70 um or less. The thickness dimension of each of the positive electrode current collector and the negative electrode current collector is a thickness inside the secondary battery, and the average value of measured values at random 10 points may be employed.

The separator that can be used for the positive electrode and the negative electrode is a member that can be provided from the viewpoint of preventing a short circuit due to contact between the positive electrode and the negative electrode, holding the electrolyte, and the like. In other words, the separator can be considered as a member that allows ions to pass through while preventing electronic contact between the positive electrode and the negative electrode. For example, the separator may be a porous or microporous insulating member, which may have a film form due to its small thickness. By way of example only, a microporous membrane made of a polyolefin may be used as the separator. In this respect, the microporous membrane that can be used as the separator may contain, for example, only a polyethylene (PE) or only a polypropylene (PP) as the polyolefin. Further, the separator may be a stacked body that may be composed of a "microporous membrane made of PE" and a "microporous membrane made of PP". The surface of the separator may be covered with an inorganic particle coating layer and/or an adhesive layer. The surface of the separator may have adhesiveness. Further, in the present disclosure, the separator is not to be particularly limited by its name, and may be solid electrolytes, gel-like electrolytes, and/or insulating inorganic particles that have a similar function.

The thickness dimension of the separator is not particularly limited, and may be 1 um or more and 100 um or less, and is, for example, 2 um or more and 20 um or less. The thickness dimension of the separator is a thickness inside the secondary battery (particularly, the thickness between the positive electrode and the negative electrode), and the average value of measured values at random 10 points may be employed.

For the secondary battery according to the present disclosure, generally the electrode assembly composed of the electrode-constituting layers including the positive electrode, the negative electrode, and the separator may be enclosed together with an electrolyte in the exterior body. The electrolyte may be a "non-aqueous" electrolyte containing an organic electrolyte and/or an organic solvent, and the like, or may be an "aqueous" electrolyte containing water. When the positive electrode and the negative electrode have a layer capable of occluding and releasing lithium ions, the electrolyte may be a "non-aqueous" electrolyte. More specifically, the electrolyte may be a non-aqueous electrolyte or a non-aqueous electrolytic solution. In the electrolyte, metal ions released from the electrode (positive electrode and/or negative electrode) are present, and the electrolyte can thus assist the movement of metal ions in the battery reaction. A non-aqueous electrolyte assists the movement of lithium ions may be used. It is to be noted that the electrolyte may have a form such as a liquid form or a gel form.

The non-aqueous electrolyte is an electrolyte including a solvent and a solute. The solvent may be an organic solvent. The specific organic solvent of the non-aqueous electrolyte may contain at least a carbonate. Such a carbonate may be a cyclic carbonate and/or a chain carbonate. Although not particularly limited, examples of the cyclic carbonates include at least one selected from the group consisting of a propylene carbonate (PC), an ethylene carbonate (EC), a butylene carbonate (BC), and a vinylene carbonate (VC). Examples of the chain carbonates include at least one selected from the group consisting of a dimethyl carbonate (DMC), a diethyl carbonate (DEC), an ethyl methyl carbonate (EMC), and a dipropyl carbonate (DPC). By way of an example only, combinations of cyclic carbonates and chain carbonates may be used as the non-aqueous electrolyte, and for example, a mixture of an ethylene carbonate and a diethyl carbonate may be used. As a specific solute for the non-aqueous electrolyte, for example, Li salts such as $LiPF_6$ and/or $LiBF_4$ may be used.

In the present disclosure, the "exterior body" that can be included in the secondary battery generally means a member capable of housing or enclosing an electrode assembly obtained by stacking at least one electrode-constituting layer including a positive electrode, a negative electrode, and a separator, together with an electrolyte, if necessary.

For example, the exterior body may be a metal exterior body that has a non-laminate configuration. The metal exterior body that has the non-laminate configuration is not a laminate member composed of a metal sheet/a fusion layer/a protective layer, but has a configuration including a single metal member. For example, the metal exterior body may be a single member made of a metal such as stainless steel (SUS) or aluminum. The term "single metal member" as used herein means that the exterior body has no so-called laminate configuration in a broad sense, and means that the exterior body is a member made substantially of only a metal in a narrow sense. Thus, as long as the metal exterior body is a member made substantially of only a metal, the surface of the metal exterior body may be subjected to an appropriate surface treatment.

The metal exterior body has a thickness of, for example, 50 um or more and 300 um or less, preferably 50 um or more and 200 um or less. The use of such a thin exterior body can contribute to a reduction in the size of the secondary battery and an improvement in the energy density thereof.

The exterior body may be a metal exterior body. In addition, such a metal exterior body may have a two-part configuration that can be composed of a cup-shaped member and a lid-shaped member. The cup-shaped member and the lid-shaped member each may be a single member made of a metal.

The "insulating member" included in the secondary battery in the present disclosure is a member interposed between the "exterior body" and the "flat plate-shaped terminal" described in detail below, which can contribute to the "insulation" therebetween. The type of the insulating member is not particularly limited as long as the insulating member exhibits an "insulating property". The insulating member may have not only an "insulating property" but also "adhesiveness" and/or "fusibility".

As the insulating member, for example, a resin material, an elastomer material, a glass material, or the like can be used.

As the resin material, for example, a heat-sealable resin can be used. Examples of the heat-sealable resin include a polyolefin-based resin such a polyethylene and/or a polypropylene, and a copolymer thereof. The heat-sealable resin may be chemically modified. As the insulating member, a single-layer film of a heat-sealable resin, a multilayer film containing a heat-sealable resin, or the like can be used. Examples of the multilayer film include a multilayer heat-sealable film where both surfaces of a high-melting-point resin layer to serve as an intermediate layer are sandwiched between low-melting-point resin layers (for example, heat-sealable resin layers).

Viewed from another aspect, the resin material may contain a component of an adhesive that exhibits an insulating property. Examples of such an adhesive include an acrylic-based adhesive such as an acrylic acid ester copolymer, a rubber-based adhesive such as natural rubber, a silicone-based adhesive such as silicone rubber, a urethane-based adhesive such as urethane resin, an $\alpha$-olefin-based adhesive, an ether-based adhesive, an ethylene-vinyl acetate-based resin adhesive, an epoxy resin-based adhesive, a vinyl chloride resin-based adhesive, a chloroprene rubber-based adhesive, a cyanoacrylate-based adhesive, an aqueous polymer-isocyanate-based adhesive, a styrene-butadiene rubber-based adhesive, a nitrile rubber-based adhesive, a nitrocellulose-based adhesive, a reactive hot-melt-based adhesive, a phenol resin-based adhesive, a modified silicone-based adhesive, a polyamide resin-based adhesive, a polyimide-based adhesive, a polyurethane resin-based adhesive, a polyolefin resin-based adhesive, a polyvinyl acetate resin-based adhesive, a polystyrene resin solvent-based adhesive, a polyvinyl alcohol resin-based adhesive, a polyvinyl pyrrolidone resin-based adhesive, a polyvinyl butyral resin-based adhesive, a polybenzimidazole-based adhesive, a polymethacrylate resin-based adhesive, a melamine resin-based adhesive, an urea resin-based adhesive, and/or a resorcinol-based adhesive.

Examples of the elastomer material include polyester-based thermoplastic elastomers.

Examples of the glass material include oxide-based glass with a low melting point, such as borate-based glass, silicate-based glass, germanate-based glass, vanadate-based glass, and phosphate-based glass.

The insulating member may have one or more layers, and the number of layers is not particularly limited. The thickness of the insulating member is, for example, 10 um or more and 100 um or less, preferably 10 um or more and 50 um or less.

[Features of Battery according to Present Disclosure]

The secondary battery according to the present invention has features regarding an exterior body capable of housing or enclosing an electrode assembly and an electrolyte, if necessary, and peripheral components therefor. In particular, the secondary battery has features in terms of elements related to the exterior body for secondary battery and a "flat plate-shaped terminal" that can function as an electrode terminal (that is, a positive electrode terminal or a negative electrode terminal) attached to the exterior body.

Specifically, the secondary battery according to the present invention includes an electrode assembly, and an exterior body capable of housing or enclosing the electrode assembly and an electrolyte, if necessary, and is characterized in that the exterior body is provided with a flat plate-shaped terminal joined with an insulating member interposed therebetween.

The "flat plate-shaped terminal" that can be included in the secondary battery according to the present disclosure includes a "first terminal member" and a "second terminal member", and the first terminal member and the second terminal member may be formed from materials that have different "linear expansion coefficients" from each other.

In the present disclosure, the "linear expansion coefficient", which is also referred to as a "linear expansion coefficient", generally means the amount of expansion/contraction per unit length of an object, which can be caused by a temperature change of a unit temperature (for example, 1 K or 1°C). For example, an object such as a metal expands as the temperature increases and contracts as the temperature decreases. The linear expansion coefficient $\beta$ can be expressed by the following formula, where the length of such an object is denoted by 1, and the temperature is denoted by T:

[Mathematical Formula 1]

$$\beta = (\partial l / \partial T) / l$$

In the present disclosure, the materials that can be used to form the first terminal member and the second terminal member are not particularly limited as long as the first terminal member and the second terminal member are formed from materials that have different linear expansion coefficients from each other.

For example, as shown by the secondary battery 10 according to an embodiment of the present disclosure in FIG. 1, for the flat plate-shaped terminal 5, the first terminal member 1 and the second terminal member 2 may be stacked on each other, and the first terminal member 1 may be stacked on the upper side of the second terminal member 2. The second terminal member 2 that can be included in the flat plate-shaped terminal 5 may be disposed on the upper side of the insulating member 3 so as to face the insulating member 3 directly or indirectly.

In the present disclosure, the shapes of the first terminal member and second terminal member that can be included in the flat plate-shaped terminal are not particularly limited. The first terminal member and the second terminal member may both have a flat plate shape. The first terminal member and the second terminal member may have the same dimension and/or shape.

In the present disclosure, the material capable of forming the first terminal member is preferably a metal or an alloy, and more preferably selected from the group consisting of aluminum, stainless steel (SUS), copper, and nickel. The material capable of forming the first terminal member may be carbon or a conductive resin.

In the present disclosure, the material capable of forming the second terminal member is preferably a metal or an alloy, and more preferably selected from the group consisting of aluminum, stainless steel (SUS), copper, and nickel. The material capable of forming the second terminal member may be carbon or a conductive resin.

When the material is aluminum, the linear expansion coefficient is about $23 \times 10^{-6}$ /K.

In the case of stainless steel (SUS), the linear expansion coefficient is about $17 \times 10^{-6}$ /K.

In the case of copper, the linear expansion coefficient is about $17 \times 10^{-6}$ /K.

In the case of nickel, the linear expansion coefficient is about $13 \times 10^{-6}$ /K.

As long as the first terminal member and the second terminal member have different linear expansion coefficients from each other, the combination of the material that forms the first terminal member and the material that forms the second terminal member is not particularly limited.

In the present disclosure, the first terminal member and the second terminal member may be coupled to form a flat plate-shaped terminal. The flat plate-shaped terminal may be formed from a cladded material composed of the first terminal member and the second terminal member. In the present disclosure, the flat plate-shaped terminal may have not only the first terminal member and the second terminal member, but also layers of other terminal members stacked optionally.

Examples of stacking three or more layers include an example in which one or more layers of third terminal members are disposed between the first terminal member and the second terminal member, and an example in which one or more layers of fourth terminal members are disposed in contact with the first terminal member to be located on the side opposite to the insulating member. The materials constituting the third terminal member and the fourth terminal member are not particularly limited, and the same materials as the first terminal member and the second terminal member may be used.

The first terminal member and the second terminal member may each independently have a plating layer or a surface treatment layer that has a thickness of 10% or less with respect to each layer. The plating layer or the surface treatment layer may be formed from a material containing chromium, nickel, or the like.

The flat plate-shaped terminal can be, because the first terminal member and the second terminal member have different linear expansion coefficients from each other, displaced or deformed and then warped with the rise in temperature.

For example, as shown in FIG. 3, the flat plate-shaped terminal can warp while curving upward as a whole. For example, the flat plate-shaped terminal can be curved in a dome shape or an arcuate shape. Specifically, the central part can warp upward in a sectional view. In other words, both ends can warp downward in a sectional view.

For example, as shown in FIG. 5, the flat plate-shaped terminal can also warp while curving downward as a whole. For example, the flat plate-shaped terminal can be curved in a mortar shape or an arcuate shape. Specifically, the central part can warp downward in a sectional view. In other words, both ends can warp upward in a sectional view.

For example, the flat plate-shaped terminal is warped due to a rise in temperature, thereby allowing at least a part of the flat plate-shaped terminal to be separated from the insulating member (see FIGS. 2B and 4B). When a pressure is applied from the inside of the battery in such a condition, the sealing part can be cleaved at a lower pressure.

In the present disclosure, the "sealing part" means a part where the flat plate-shaped terminal is coupled to the exterior body with the insulating member interposed therebetween at the surface of the exterior body, particularly around the opening. The sealing part can be illustrated, for example, as a part surrounded by a dashed line in FIG. 1.

In the present disclosure, the "cleavage" of the "sealing part" generally means the release of the coupling between the flat plate-shaped terminal and the insulating member. In other words, the "cleavage" means that the flat plate-shaped terminal and the insulating member are not coupled. In addition, the "cleavage" of the "sealing part" can also encompass the release of the coupling between the insulating member and the exterior body.

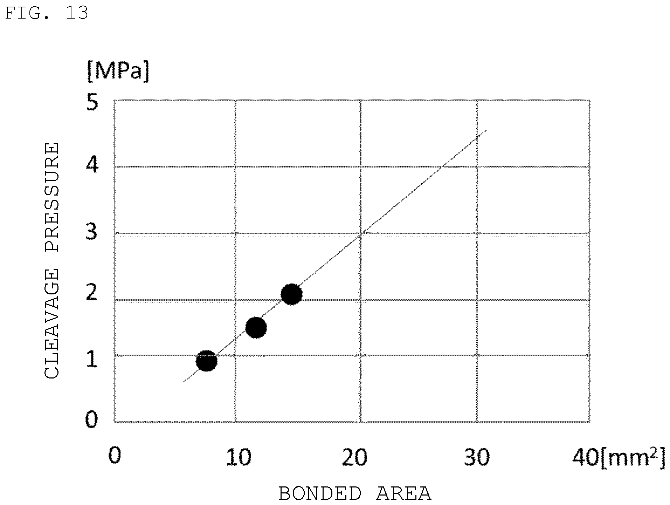

The pressure inside the battery immediately before the "cleavage" of the sealing part is referred to as a "cleavage pressure". The "cleavage pressure" generally depends on the bonded area between the flat plate-shaped terminal and the insulating member (see, for example, FIG. 13). More specifically, there is a trade-off relationship between the "cleavage pressure" and the "bonded area" and "sealing property". In the secondary battery according to the present disclosure, however, while securing the "bonded area" and the "sealing property", in other words, without reducing the sealing property, thermal stress is generated in the case of a rise in temperature to warp the flat plate-shaped terminal, thereby allowing the "cleavage pressure" to be further reduced.

In the present disclosure, the linear expansion coefficient of the first terminal member may be larger than the linear expansion coefficient of the second terminal member. In other words, the linear expansion coefficient of the second terminal member may be smaller than the linear expansion coefficient of the first terminal member.

Alternatively, the linear expansion coefficient of the second terminal member may be larger than the linear expansion coefficient of the first terminal member. In other words, the linear expansion coefficient of the first terminal member may be smaller than the linear expansion coefficient of the second terminal member.

When the linear expansion coefficient of the first terminal member is larger than the linear expansion coefficient of the second terminal member, the central part of the flat plate-shaped terminal can warp upward in a sectional view, for example, as shown in FIG. 3.

For example, when the material that forms the first terminal member is aluminum, whereas the material that forms the second terminal member is selected from the group consisting of stainless steel, copper, and nickel, or when the material that forms the second terminal member is nickel, whereas the material that forms the first terminal member is selected from the group consisting of aluminum, stainless steel, and copper, the linear expansion coefficient of the first terminal member is larger than the linear expansion coefficient of the second terminal member. For example, as shown in FIG. 3, the central part of the flat plate-shaped terminal can warp upward in a sectional view. In addition, such a combination allows a more stable electrode in the operating potential range.

When the linear expansion coefficient of the second terminal member is larger than the linear expansion coefficient of the first terminal member, the central part of the flat plate-shaped terminal can warp downward in a sectional view, for example, as shown in FIG. 5.

For example, when the material that forms the first terminal member is nickel, whereas the material that forms the second terminal member is selected from the group consisting of aluminum, stainless steel, and copper, or when the material that forms the second terminal member is aluminum, whereas the material that forms the first terminal member is selected from the group consisting of stainless steel, copper, and nickel, the linear expansion coefficient of the second terminal member is larger than the linear expansion coefficient of the first terminal member. For example, as shown in FIG. 5, the central part of the flat plate-shaped terminal can warp downward in a sectional view. In addition, such a combination allows the promotion of welding to the lead body and the external terminal. Furthermore, the combination can withstand corrosion caused by an electrolytic solution.

It is to be noted that when the material that forms the first terminal member is stainless steel, whereas the material that forms the second terminal member is selected from the group consisting of aluminum, copper, and nickel, or when the material that forms the second terminal member is stainless steel, whereas the material that forms the first terminal member is selected from the group consisting of aluminum, copper, and nickel, the central part of the flat plate-shaped terminal can be arbitrarily warped upward and downward in a sectional view.

For achieve the warpage of the flat plate-shaped terminal as described above, the difference between the linear expansion coefficient of the first terminal member and the linear expansion coefficient of the second terminal member may be $5 \times 10^{-6}$ /K or more.

Hereinafter, the secondary battery according to the present disclosure will be described in detail with reference to more specific embodiments.

[Embodiments]

FIG. 1 shows a secondary battery 10 according to an embodiment of the present disclosure.

For example, as shown in FIG. 1A, the secondary battery 10 may mainly include a flat plate-shaped terminal 5 that has a first terminal member 1 and a second terminal member 2 coupled to each other, an insulating member 3, an electrode assembly 11 (see, for example, FIG. 10), and an exterior body 4 capable of housing the electrode assembly 11 and an electrolyte, if necessary.

The exterior body 4 may have, at the top thereof, an opening, and a lead body (not shown) capable of electrically connecting the electrode assembly 11 (more specifically, a positive electrode or a negative electrode) and the flat plate-shaped terminal 5 can be disposed through the opening.

For example, a disk-shaped, preferably donut-shaped insulating member 3 in a top view may be disposed on the outer surface around the opening of the exterior body 4. Above the insulating member 3, the flat plate-shaped terminal 5 may be disposed and then coupled such that the second terminal member 2 of the flat plate-shaped terminal 5 is brought into contact with at least a part of the insulating member 3.

The flat plate-shaped terminal 5 may have a disk shape. When the flat plate-shaped terminal 5 has a disk shape, the diameter thereof is not particularly limited, and is, for example, 5 mm to 10 mm.

The exterior body 4 and the flat plate-shaped terminal 5 are coupled with the insulating member 3 interposed therebetween, thereby allowing the formation of, for example, a sealing part as indicated by the dashed line in FIG. 1A. For example, the coupling can be formed by the adhesiveness and/or fusibility of the insulating member 3. Such a sealing part can secure a sealing property.

FIG. 1B schematically illustrates the sealing part. For example, when gas is generated inside the battery due to an abnormal rise in temperature (for example, 40°C or higher and 120°C or lower) in charge-discharge, or when the pressure is increased, the flat plate-shaped terminal 5, particularly the second terminal member 2 is pressed by a force ($F_1$) along the arrow. In this regard, the second terminal member 2 may be referred to as an "inner terminal member", and the first terminal member 1 may be referred to as an "outer terminal member".

For the flat plate-shaped terminal 5, the first terminal member 1 and the second terminal member 2 may be formed from materials that have different linear expansion coefficients from each other, and the linear expansion coefficient of the first terminal member 1 is larger than the linear expansion coefficient of the second terminal member 2.

For example, in charge-discharge, in a normal temperature range (for example, 0°C or higher and lower than 40°C), preferably at ambient temperatures (for example, 25°C), high sealability can be maintained without forming any "warpage" at the flat plate-shaped terminal 5, for example, as schematically shown in FIG. 2A.

For example, when an abnormal rise in temperature is caused in charge-discharge, for example, as schematically shown in FIG. 2B, "warpage" is caused at the flat plate-shaped terminal 5 under the influence of the rise in temperature, and at least a part of the flat plate-shaped terminal 5 can be separated from the insulating member 3. In the present disclosure, any one of the left and right coupled ends of the flat plate-shaped terminal 5 has only to be separated.

In such a condition, the sealing part can be cleaved with a smaller force ($F_1$). More specifically, the sealing part can be cleaved at a lower internal pressure.

In this regard, the thickness of each member is not particularly limited. For example, as shown in FIG. 1B, the thickness $T_1$ of the first terminal member 1 is, for example, 50 um to 150 um. The thickness $T_2$ of the second terminal member 2 is, for example, 50 um to 150 um. The thickness $T_0$ ($= T_1 + T_2$) of the whole flat plate-shaped terminal 5 is, for example, 100 um to 300 $\mu$m.

The ratio ($T_1/T_2$) of the thickness $T_1$ of the first terminal member 1 to the thickness $T_2$ of the second terminal member 2 is not particularly limited, and may be, for example, 1/1.

The thickness $T_3$ of the insulating member 3 is, for example, 10 um to 100 $\mu$m.

The thickness $T_4$ of the exterior body 4 is, for example, 50 um to 200 $\mu$m.

For example, FIG. 3 schematically illustrates the flat plate-shaped terminal 5 warped upward. The magnitude $D_1$ of the warpage of the flat plate-shaped terminal 5 (the displacement of the central part or end) is not particularly limited, and is, for example, 1 um or more, preferably 10 um or more, more preferably 20 um or more, still more preferably 40 um or more. The magnitude $D_1$ of the warpage of the flat plate-shaped terminal 5 is preferably 50 um or less.

FIG. 4 shows a secondary battery 20 according to another embodiment.

For example, as shown in FIG. 4A, the secondary battery 20 may mainly include a flat plate-shaped terminal 25 that has a first terminal member 21 and a second terminal member 22 coupled to each other, an insulating member 23, an electrode assembly 11 (see FIG. 10), and an exterior body 24 capable of housing the electrode assembly 11 and an electrolyte, if necessary.

In the secondary battery 20, the insulating member 23, the exterior body 24, and the flat plate-shaped terminal 25 may correspond respectively to the insulating member 3, exterior body 4, and the flat plate-shaped terminal 5 of the secondary battery 10 shown in FIG. 1. Regarding the first terminal member 21 and second terminal member 22 included in the flat plate-shaped terminal 25 shown in FIG. 4, the linear expansion coefficient of the second terminal member 22 is larger than the linear expansion coefficient of the first terminal member 21.

Because the linear expansion coefficient of the second terminal member 22 is larger than the linear expansion coefficient of the first terminal member 21 in the flat plate-shaped terminal 25, for example, as schematically shown in FIG. 4B, when an abnormal rise in temperature is caused in charge-discharge, the flat plate-shaped terminal 25 is affected by the rise in temperature, downward "warpage" is then caused at the central part of the flat plate-shaped terminal 25 in a sectional view, and at least a part of the flat plate-shaped terminal 25, particularly the ends thereof can be separated from the insulating member 33.

For example, FIG. 5 schematically illustrates the flat plate-shaped terminal 25 warped downward. The magnitude $D_2$ of the warpage of the flat plate-shaped terminal 25 (the displacement of the central part or end) is not particularly limited, and is, for example, 1 um or more, preferably 10 um or more, more preferably 20 um or more, still more preferably 40 um or more.

Also in the secondary battery 20, the sealing part can be cleaved at a lower pressure when the internal pressure is increased due to an abnormal rise in temperature, while securing the sealing property.

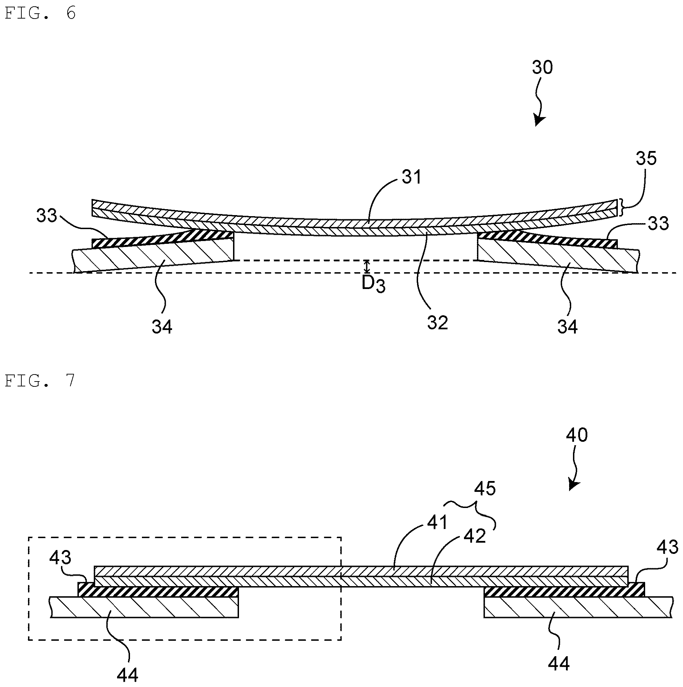

FIG. 6 shows a secondary battery 30 according to another embodiment.

The secondary battery 30 may mainly include a flat plate-shaped terminal 35 that has a first terminal member 31 and a second terminal member 32 coupled to each other, an insulating member 33, an electrode assembly 11 (see FIG. 10), and an exterior body 34 capable of housing the electrode assembly 11 and an electrolyte, if necessary.

In the secondary battery 30, the insulating member 33, the exterior body 34, and the flat plate-shaped terminal 35 may correspond respectively to the insulating member 23, exterior body 24, and flat plate-shaped terminal 25 of the secondary battery 20 shown in FIG. 4. The secondary battery 30 shown in FIG. 6 is, however, configured such that the exterior body 34 can also be deformed upward when the internal pressure is increased due to an abnormal rise in temperature. The exterior body 34 can be deformed upward, for example, by reducing the thickness of the exterior body 34 or changing the material. The secondary battery 30 has such a configuration, and the warped shape of the flat plate-shaped terminal 35 will then not follow the deformation of the exterior body 34, and thus, the area of contact between the second terminal member 32 of the flat plate-shaped terminal 35 and the insulating member 33 can be further reduced. Accordingly, the sealing part can be cleaved at a still lower pressure when the internal pressure is increased due to an abnormal rise in temperature.

The displacement $D_3$ of the peripheral edge of the opening of the exterior body 34 is not particularly limited, and is, for example, 1 um or more, preferably 10 um or more, more preferably 20 um or more, still more preferably 40 um or more.

FIG. 7 shows a secondary battery 40 according to still another embodiment.

The secondary battery 40 may mainly include a flat plate-shaped terminal 45 that has a first terminal member 41 and a second terminal member 42 coupled to each other, an insulating member 43, an electrode assembly 11 (see FIG. 10), and an exterior body 44 capable of housing the electrode assembly 11 and an electrolyte, if necessary.

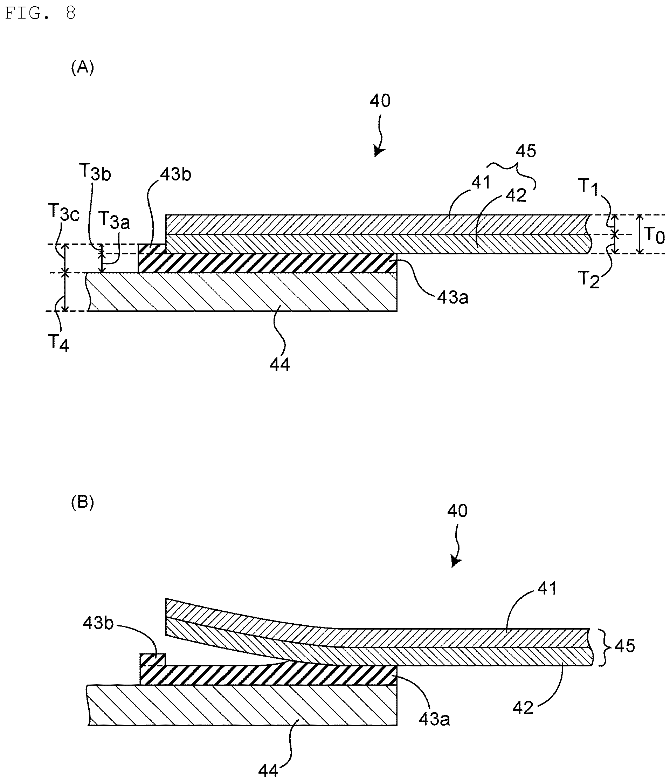

In the secondary battery 40, the insulating member 43, the exterior body 44, and the flat plate-shaped terminal 45 may correspond respectively to the insulating member 23, exterior body 24, and flat plate-shaped terminal 25 of the secondary battery 20 shown in FIG. 4. The insulating member 43 of the secondary battery 40 shown in FIG. 7 may, however, have a raised part 43b that covers at least a part of the peripheral edge of the flat plate-shaped terminal 45 (see FIG. 8).

In the present disclosure, the "peripheral edge" of the flat plate-shaped terminal generally means a side part of the flat plate-shaped terminal excluding two main surfaces thereof.

More specifically, as shown in FIG. 8A, the insulating member 43 has a flat part 43a and the raised part 43b.

For example, as shown in FIG. 8A, the raised part 43b can cover the peripheral edge of the flat plate-shaped terminal 45, in particular, at least a part of the peripheral edge of the second terminal member 42. Such a configuration allows the coupling and sealing properties to be further enhanced between the flat plate-shaped terminal 45 and the insulating member 43.

The thickness $T_{3b}$ of the raised part 43b may be 5% or more and 20% or less of the thickness $T_0$ of the flat plate-shaped terminal 45. More specifically, the ratio ($T_{3b}/T_0$) of the thickness $T_{3b}$ of the raised part 43b to the thickness $T_0$ of the flat plate-shaped terminal shown in FIG. 8A may be, for example, 1/20 or more and 1/5 or less. Within such a range, the sealing property can be secured, and the cleavage of the sealing part in the case of a rise in temperature can be smoothly promoted. It is to be noted that the ratio of $T_{3b}/T_0$ may be 1/2 or more, and the raised part 43b may cover at least a part of the peripheral edge of the first terminal member 41.

The thickness $T_{3b}$ of the raised part 43b is, for example, 10 um or more and 50 um or less, preferably 10 um or more and 40 um or less.

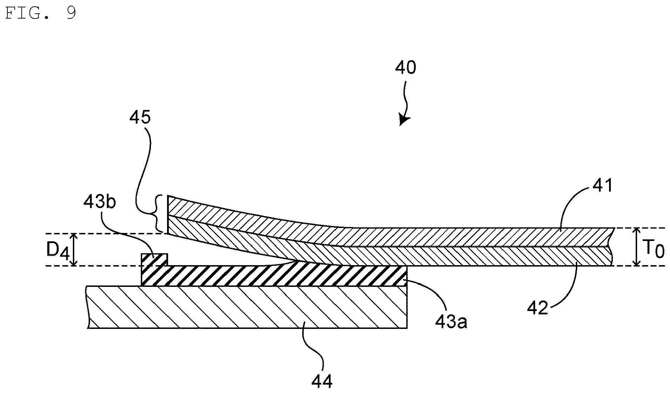

FIG. 8B schematically illustrates the flat plate-shaped terminal 45 warped downward. More specifically, as shown in FIG. 9, the magnitude $D_4$ of the warpage of the flat plate-shaped terminal 45 (the displacement of the end) is not particularly limited, and is, for example, 10 um or more, preferably 20 um or more, more preferably 40 um or more.

The magnitude $D_4$ of the warpage of the flat plate-shaped terminal 45 is preferably larger than the thickness $T_{3b}$ of the raised part 43b shown in FIG. 8A.

The secondary battery according to the present disclosure should not be construed as being limited to the embodiments mentioned above.

(Other Configurations)

In the present disclosure, the "lead body" or "tab" means a conductive member that can be electrically connected to the positive electrode or negative electrode of the electrode assembly, and may protrude or extend from the electrode assembly. Such a tab can be attached to the inner main surface of the flat plate-shaped terminal, in particular, the inner terminal member at least through the opening of the exterior body, and can be responsible for electrical connection between the inner terminal member and the electrode layer of either the positive electrode or negative electrode of the electrode assembly. Such a lead body or a tab may extend from the "current collector" (that is, the "positive electrode current collector" or the "negative electrode current collector") described above, and may be formed from the same material as the current collector.

In the present disclosure, the flat plate-shaped terminal may be an electrode terminal. The flat plate-shaped terminal may be one of the positive electrode and the negative electrode, and the exterior body may be the other of the positive electrode and the negative electrode. In particular, in the secondary battery according to the present disclosure, the flat plate-shaped terminal may serve as a positive electrode, and the exterior body may serve as a negative electrode. With such a configuration, the negative electrode can be made larger than the positive electrode.

Accordingly, the exterior body may be a metal exterior body. The metal exterior body has a two-part configuration of a cup-shaped member and a lid-shaped member.

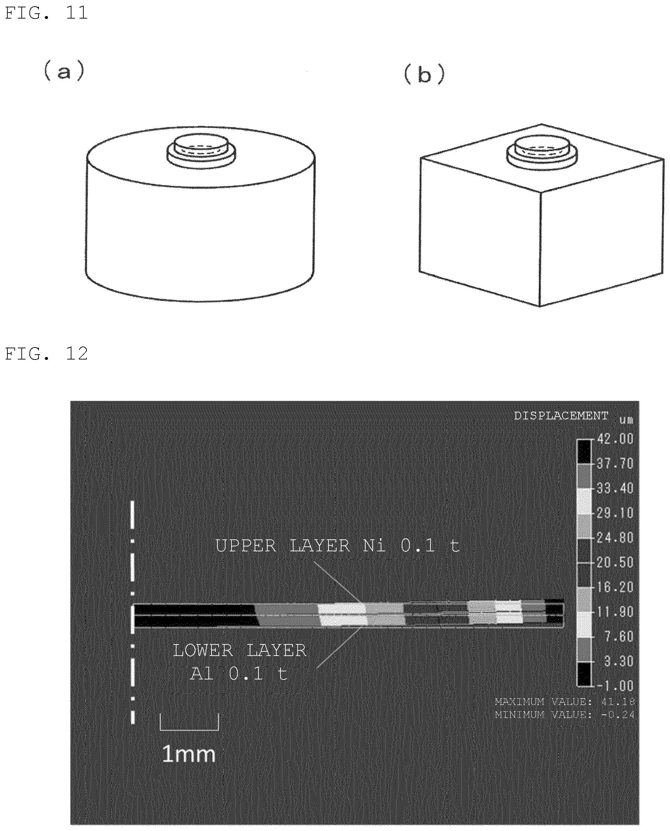

The secondary battery according to the present disclosure may be a secondary battery that has a circular shape in a planar view, and may be a secondary battery that has a substantially cylindrical shape as a whole, such as a button shape or a coin shape (see, for example, FIG. 11(a)). The secondary battery according to the present disclosure is, however, not to be considered limited to a secondary battery that has a button shape or a coin shape. The secondary battery according to the present disclosure may be, for example, a secondary battery that has an angular shape (see, for example, FIG. 11(b)). More specifically, the planar view shape of the secondary battery according to the present disclosure is not limited to any circular shape, and may have a shape such as a quadrangular shape or a rectangular shape.

In addition, in the aspect illustrated in FIG. 11, the flat plate-shaped terminal is illustrated in a circular shape, but may have a rectangular shape or another geometric shape.

In the secondary battery according to the present disclosure, the electrodes of the electrode assembly may include a positive electrode and a negative electrode capable of occluding and releasing lithium ions. Such a secondary battery can be used as a lithium ion secondary battery. The secondary battery according to the present disclosure is, however, not to be considered limited to a lithium ion secondary battery.

(Manufacturing Method)

The secondary battery according to the present disclosure, particularly the configuration near the electrode terminal (or the terminal member) can be manufactured in the same manner as a manufacturing method known conventionally.

Specifically, the configuration near the electrode terminal (or the terminal member) according to the present invention can be formed by stacking a flat plate-shaped terminal, an insulating member with an opening, and an exterior body similarly with an opening in this order and pressurizing the stack while heating the stack.

The method for coupling the first terminal member and the second terminal member in the flat plate-shaped terminal is not particularly limited. For example, a conventionally known method for joining metal plates can be used without particular limitation.

Hereinafter, the secondary battery according to the present disclosure will be described in detail with reference to some examples.

EXAMPLES

[Example 1]

As a secondary battery according to Example 1, the secondary battery 10 with a button-type structure, for example, schematically shown in FIG. 1, was prepared. Each configuration was as described below. The electrode assembly 11 was prepared in accordance with a usual method for producing an electrode assembly.

> Flat plate-shaped terminal 5: Cladded material (bimetallic) of first terminal member 1 and second terminal member 2
> First terminal member 1: Aluminum (Al) of $23 \times 10^{-6}$ /K in linear expansion coefficient
> Second terminal member 2: Stainless steel (SUS 304) of $17 \times 10^{-6}$ /K in linear expansion coefficient
> Insulating Member 3: Modified polypropylene
> Exterior body 4: Stainless steel (SUS 304)

The exterior body 4 was adapted to a two-part configuration of a cylindrical cup-shaped member and a disk-shaped lid-shaped member, and the central part of the lid-shaped member was provided with a circular opening.

The electrode assembly 11 was disposed together with a non-aqueous electrolytic solution in the cylindrical cup-shaped member of the exterior body 4, and the cup-shaped member was closed by welding with the lid-shaped member. In this regard, the positive electrode of the electrode assembly 11 and the second terminal member 2 of the flat plate-shaped terminal 5 were electrically connected via a tab, and similarly, the negative electrode of the electrode assembly 11 and the cup-shaped member of the exterior body 4 were electrically connected via a tab.

Around the circular opening of the lid-shaped member, a concentric disk-shaped insulating member 3 with a similar opening was disposed.

On the upper surface of the insulating member 3, the flat plate-shaped terminal 5 in a disk shape was further disposed by pressing on heating. In this regard, the second terminal member 2 of the flat plate-shaped terminal 5 and the insulating member 3 were bonded to each other.

In the secondary battery 10 according to Example 1, while the temperature was raised to 120°C, thermal stress was generated due to a difference in linear expansion coefficient between the first terminal member 1 and second terminal member 2 of the flat plate-shaped terminal 5, and this thermal stress caused the central part of the flat plate-shaped terminal 5 to warp upward, thereby causing a force to act to separate the bonded face between the second terminal member 2 and the insulating member 3 (see FIG. 2B). As a result, the internal pressure of the secondary battery 10 was increased, thereby cleaving the sealing part formed by the flat plate-shaped terminal 5 and the insulating member 3 at the surface around the opening of the exterior body 4.

From the foregoing results, it has been demonstrated that the sealing property can be secured in the normal operating temperature range (for example, at ordinary temperatures (25°C)) of the battery because almost no thermal stress is generated, whereas the sealing part is cleaved at a lower pressure due to warpage of the flat plate-shaped terminal 5 in the case of an abnormal rise in temperature.

[Example 2]

The secondary battery 10 shown in FIG. 1 was prepared in the same manner as in Example 1, except for the use of the following flat plate-shaped terminal.

Flat plate-shaped terminal 5: Cladded material of first terminal member 1 and second terminal member 2
First terminal member 1: Aluminum (Al) of $23 \times 10^{-6}$ /K in linear expansion coefficient

Second terminal member 2: Nickel (Ni) of $13 \times 10^{-6}$ /K in linear expansion coefficient

The same results as in Example 1 could be obtained.

[Example 3]

The secondary battery 10 shown in FIG. 1 was prepared in the same manner as in Example 1, except for the use of the following flat plate-shaped terminal.

Flat plate-shaped terminal 5: Cladded material of first terminal member 1 and second terminal member 2
First terminal member 1: Stainless steel (SUS 304) of $17 \times 10^{-6}$ /K in linear expansion coefficient
Second terminal member 2: Nickel (Ni) of $13 \times 10^{-6}$ /K in linear expansion coefficient

The same results as in Example 1 could be obtained.

[Example 4]

The secondary battery 20 shown in FIG. 4 was prepared in the same manner as in Example 1, except for the use of the following flat plate-shaped terminal.

Flat plate-shaped terminal 25: Cladded material of first terminal member 21 and second terminal member 22
First terminal member 21: Stainless steel (SUS 304) of $17 \times 10^{-6}$ /K in linear expansion coefficient
Second terminal member 22: Aluminum (Al) of $23 \times 10^{-6}$ /K in linear expansion coefficient

In the secondary battery 20, as shown in FIG. 4B, the central part of the flat plate-shaped terminal 25 warped downward, thereby causing the sealing part to be cleaved at a lower pressure in the case of an abnormal rise in temperature.

[Example 5]

The secondary battery 20 shown in FIG. 4 was prepared in the same manner as in Example 4, except for the use of the following flat plate-shaped terminal.

Flat plate-shaped terminal 25: Cladded material of first terminal member 21 and second terminal member 22
First terminal member 21: Nickel (Ni) of $13 \times 10^{-6}$ /K in linear expansion coefficient
Second terminal member 22: Stainless steel (SUS 304) of $17 \times 10^{-6}$ /K in linear expansion coefficient

In this secondary battery 20, as shown in FIG. 4B, the central part of the flat plate-shaped terminal 25 warped downward, thereby causing the sealing part to be cleaved at a lower pressure in the case of an abnormal rise in temperature.

[Example 6]

The secondary battery 20 shown in FIG. 4 was prepared in the same manner as in Example 4, except for the use of the following flat plate-shaped terminal.

Flat plate-shaped terminal 25: Cladded material of first terminal member 21 and second terminal member 22
First terminal member 21: Nickel (Ni) of $13 \times 10^{-6}$ /K in linear expansion coefficient
Second terminal member 22: Aluminum (Al) of $23 \times 10^{-6}$ /K in linear expansion coefficient

In this secondary battery 20, as shown in FIG. 4B, the central part of the flat plate-shaped terminal 25 warped downward, thereby causing the sealing part to be cleaved at a lower pressure in the case of an abnormal rise in temperature.
FIG. 12 shows warpage of the outer peripheral edge portion of the flat plate-shaped terminal 25 ($\varphi$ 7.2 mm) in the case of raising the temperature from ordinary temperature (25°C) to 120°C. Warpage of about 40 um was caused from the central part of the flat plate-shaped terminal 25 to the outer peripheral edge thereof.
The relationship between the bonded area between the second terminal member 22 and the insulating member 23 and the cleavage pressure is shown in the graph of FIG. 13 (ordinary temperature (25°C)). From the graph of FIG. 13, a proportional relationship has been found between the bonded area and the cleavage pressure.
From the foregoing results, it has been demonstrated that the sealing property can be secured in the normal operating temperature range (for example, at ordinary temperatures (25°C)) of the battery because almost no thermal stress is generated, whereas the sealing part is cleaved at a lower pressure by the reduction in the bonded area due to warpage of the flat plate-shaped terminal 25 in the case of an abnormal rise in temperature.

[Examples 7 to 9]

The secondary battery 30 shown in FIG. 6 was prepared in the same manner as in each of Examples 4 to 6, except for reducing the thickness of the exterior body, especially the lid-shaped member of the exterior body (secondary batteries according to Examples 7 to 9).
For the secondary battery 30, as shown in FIG. 6, the central part of the flat plate-shaped terminal 35 was warped downward, whereas the exterior body 34 was warped upward so as to face the downward warpage of the central part, the bonded area between the insulating member 33 and the second terminal member 32 was thus further reduced in the case of an abnormal rise in temperature, and the sealing part was cleaved at a still lower pressure.

[Examples 10 to 12]

The secondary battery 40 shown in FIG. 7 was prepared in the same manner as in each of Example 4 to 6, except that the insulating member is provided with a raised part (secondary battery of Example 10 to 12).
In the case of the secondary battery 40 shown in FIGS. 7 and 8, in the manufacture thereof, an insulating member that was uniform in thickness with an area larger than that of the flat plate-shaped terminal 45 was prepared, and the flat plate-shaped terminal 45 was pressed against the insulating member to form the flat part 43a and the raised part 43b of the insulating member (see FIG. 8).
In the secondary battery 40 shown in FIG. 7, the height ($T_{3b}$) of the raised part 43b was adjusted within the range of the thickness ($T_2$) of the second terminal member 42.
As compared with the secondary batteries (FIG. 4) prepared in Examples 4 to 6, in the secondary batteries 40 according to Examples 10 to 12, the bonded area between the second terminal member 42 and the insulating member 43 was improved, thereby improving the sealing property in a normal temperature range (for example, ordinary temperatures (25°C)) (FIG. 8A). In addition, the safety could be further enhanced. Furthermore, when the temperature was abnormally raised, as shown in FIG. 8B, the flat plate-shaped terminal 45 was warped to reduce the bonded area between the second terminal member 42 and the flat part 43a of the insulating member, thereby allowing the sealing part to be cleaved at a lower pressure.
Although the embodiments of the present invention have been described above, only typical examples have been described. Accordingly, the present invention is not limited thereto, and those skilled in the art will readily understand that various aspects are conceivable.

(Aspect 1)

A secondary battery including an electrode assembly and an exterior body that houses the electrode assembly,
where

the exterior body is provided with a flat plate-shaped terminal joined to the exterior body with an insulating member interposed therebetween,
the flat plate-shaped terminal includes a first terminal member and a second terminal member,
the first terminal member and the second terminal member are formed from materials that have different linear expansion coefficients from each other, the first terminal member and the second terminal member are stacked on each other such that the first terminal member is stacked on the second terminal member, and

the flat plate-shaped terminal is disposed on the insulating member such that the second terminal member faces the insulating member.

(Aspect 2)

The secondary battery according to aspect 1, where the flat plate-shaped terminal is warped due to a rise in temperature to separate the flat plate-shaped terminal from the insulating member.

(Aspect 3)

The secondary battery according to aspect 1 or 2, where the first terminal member is larger in a linear expansion coefficient than the second terminal member.

(Aspect 4)

The secondary battery according to aspect 1 or 2, where the second terminal member is larger in a linear expansion coefficient than the first terminal member.

(Aspect 5)

The secondary battery according to any one of aspects 1 to 4, where a difference in a linear expansion coefficient between the first terminal member and the second terminal member is $5 \times 10^{-6}$ /K or more.

(Aspect 6)

The secondary battery according to any one of aspects 1 to 5, where a material that forms the first terminal member is selected from the group consisting of aluminum, stainless steel, copper, and nickel.

(Aspect 7)

The secondary battery according to any one of aspects 1 to 6, where a material that forms the second terminal member is selected from the group consisting of aluminum, stainless steel, copper, and nickel.

(Aspect 8)

The secondary battery according to aspect 1, where a material that forms the first terminal member is aluminum, whereas a material that forms the second terminal member is selected from the group consisting of stainless steel, copper, and nickel, or the material that forms the second terminal member is nickel, whereas the material that forms the first terminal member is selected from the group consisting of aluminum, stainless steel, and copper.

(Aspect 9)

The secondary battery according to aspect 1, where a material that forms the first terminal member is stainless steel, whereas a material that forms the second terminal member is selected from the group consisting of aluminum, copper, and nickel, or the material that forms the second terminal member is stainless steel, whereas the material that forms the first terminal member is selected from the group consisting of aluminum, copper, and nickel.

(Aspect 10)

The secondary battery according to aspect 1, where a material that forms the first terminal member is nickel, whereas a material that forms the second terminal member is selected from the group consisting of aluminum, stainless steel, and copper, or the material that forms the second terminal member is aluminum, whereas the material that forms the first terminal member is selected from the group consisting of, stainless steel, copper, nickel.

(Aspect 11)

The secondary battery according to any one of aspects 1 to 10, where the insulating member has a raised part that covers at least a part of a peripheral edge of the flat plate-shaped terminal.

(Aspect 12)

The secondary battery according to aspect 11, where a thickness of the raised part that covers at least the part of the peripheral edge of the flat plate-shaped terminal is 5% or more and 20% or less of a thickness of the flat plate-shaped terminal.

(Aspect 13)

The secondary battery according to any one of aspects 1 to 12, where the flat plate-shaped terminal is one of a positive electrode and a negative electrode, and the exterior body is the other of the positive electrode and the negative electrode.

(Aspect 14)

The secondary battery according to any one of aspects 1 to 13, where the exterior body is a metal exterior body, and the metal exterior body has a two-part configuration of a cup-shaped member and a lid-shaped member.

(Aspect 15)

The secondary battery according to any one of aspects 1 to 14, where the secondary battery has a button shape or a coin shape.

(Aspect 16)

The secondary battery according to any one of aspects 1 to 15, where an electrode of the electrode assembly includes a positive electrode and a negative electrode capable of occluding and releasing lithium ions.

INDUSTRIAL APPLICABILITY

The secondary battery of the present disclosure can be used in various fields where electric storage is assumed. By way of example only, the secondary battery according to the present disclosure can be used in the fields of electricity, information, and communication in which electricity, electronic equipment, and the like are used (for example, electric and electronic equipment fields or mobile equipment fields including mobile phones, smartphones, notebook computers and digital cameras, activity meters, arm computers, electronic papers, and wearable devices, and small electronic machines such as RFID tags, card type electronic money, and smartwatches), home and small industrial applications (for example, the fields of electric tools, golf carts, and home, nursing, and industrial robots), large industrial applications (for example, fields of forklift, elevator, and harbor crane), transportation system fields (field of, for example, hybrid automobiles, electric automobiles, buses, trains, power-assisted bicycles, and electric two-wheeled vehicles), power system applications (for example, fields such as various types of power generation, road conditioners, smart grids, and household power storage systems), medical applications (medical equipment fields such as earphone hearing aids), pharmaceutical applications (fields such as dosage management systems), IoT fields, space and deep sea applications (for example, fields such as a space probe and a submersible), and the like.

DESCRIPTION OF REFERENCE SYMBOLS

1, 21, 31, 41: First terminal member
2, 22, 32, 42: Second terminal member
3, 23, 33, 43: Insulating member
4, 24, 34, 44: Exterior body
5, 25, 35, 45: Flat plate-shaped terminal
10, 20, 30, 40: Secondary battery
11, 111, 211: Electrode assembly
12: Positive electrode
13: Separator
14: Negative electrode
15: Electrode-constituting layer
100, 200: Conventional battery
101: Flat plate-shaped electrode terminal member
103: Sealing member
104: Exterior case
201: External terminal
202: Washer
203: Gasket
204: Battery can
205: Sealing plate
206: First groove
207: Second groove

**Claims**

1. A secondary battery comprising:

   an electrode assembly; and
   an exterior body that houses the electrode assembly,
   wherein
   the exterior body is provided with a flat plate-shaped terminal joined to the exterior body with an insulating member interposed therebetween,
   the flat plate-shaped terminal includes a first terminal member and a second terminal member,
   the first terminal member and the second terminal member are formed from materials that have different linear expansion coefficients from each other,
   the first terminal member and the second terminal member are stacked on each other such that the first terminal member is stacked on the second terminal member, and
   the flat plate-shaped terminal is disposed on the insulating member such that the second terminal member faces the insulating member.

2. The secondary battery according to claim 1, wherein the flat plate-shaped terminal is warped due to a rise in temperature to separate the flat plate-shaped terminal from the insulating member.

3. The secondary battery according to claim 1 or 2, wherein the first terminal member is larger in a linear expansion coefficient than the second terminal member.

4. The secondary battery according to claim 1 or 2, wherein the second terminal member is larger in a linear expansion coefficient than the first terminal member.

5. The secondary battery according to any one of claims 1 to 4, wherein a difference in a linear expansion coefficient between the first terminal member and the second terminal member is $5 \times 10^{-6}$ /K or

more.

6. The secondary battery according to any one of claims 1 to 5, wherein a material that forms the first terminal member is selected from the group consisting of aluminum, stainless steel, copper, and nickel.

7. The secondary battery according to any one of claims 1 to 6, wherein a material that forms the second terminal member is selected from the group consisting of aluminum, stainless steel, copper, and nickel.

8. The secondary battery according to claim 1, wherein a material that forms the first terminal member is aluminum, whereas a material that forms the second terminal member is selected from the group consisting of stainless steel, copper, and nickel, or the material that forms the second terminal member is nickel, whereas the material that forms the first terminal member is selected from the group consisting of aluminum, stainless steel, and copper.

9. The secondary battery according to claim 1, wherein a material that forms the first terminal member is stainless steel, whereas a material that forms the second terminal member is selected from the group consisting of aluminum, copper, and nickel, or the material that forms the second terminal member is stainless steel, whereas the material that forms the first terminal member is selected from the group consisting of aluminum, copper, and nickel.

10. The secondary battery according to claim 1, wherein a material that forms the first terminal member is nickel, whereas a material that forms the second terminal member is selected from the group consisting of aluminum, stainless steel, and copper, or the material that forms the second terminal member is aluminum, whereas the material that forms the first terminal member is selected from the group consisting of stainless steel, copper, and nickel.

11. The secondary battery according to any one of claims 1 to 10, wherein the insulating member has a raised part that covers at least a part of a peripheral edge of the flat plate-shaped terminal.

12. The secondary battery according to claim 11, wherein a thickness of the raised part that covers at least a part of the peripheral edge of the flat plate-shaped terminal is 5% or more and 20% or less of a thickness of the flat plate-shaped terminal.

13. The secondary battery according to any one of claims 1 to 12, wherein the flat plate-shaped terminal is one of a positive electrode and a negative electrode, and the exterior body is the other of the positive electrode and the negative electrode.

14. The secondary battery according to any one of claims 1 to 13, wherein the exterior body is a metal exterior body, and the metal exterior body has a two-part configuration of a cup-shaped member and a lid-shaped member.

15. The secondary battery according to any one of claims 1 to 14, wherein the secondary battery has a button shape or a coin shape.

16. The secondary battery according to any one of claims 1 to 15, wherein an electrode of the electrode assembly includes a positive electrode and a negative electrode capable of occluding and releasing lithium ions.

FIG. 1

(A)

(B)

FIG. 2

(A)

(B)

FIG. 3

FIG. 4

(A)

FIG. 5

FIG. 6

FIG. 7

FIG. 8

(A)

(B)

FIG. 9

FIG. 10

(A)

(B)

FIG. 11

(a)

(b)

FIG. 12

FIG. 13

FIG. 14

(A)

(B)

$F_0$

FIG. 15

## INTERNATIONAL SEARCH REPORT

| International application No. |
| --- |
| **PCT/JP2021/038626** |

### A. CLASSIFICATION OF SUBJECT MATTER

*H01M 10/052*(2010.01)i; *H01M 10/058*(2010.01)i; *H01M 50/107*(2021.01)i; *H01M 50/109*(2021.01)i;
*H01M 50/119*(2021.01)i; *H01M 50/152*(2021.01)i; *H01M 50/153*(2021.01)i; *H01M 50/159*(2021.01)i;
*H01M 50/342*(2021.01)i; *H01M 50/545*(2021.01)i; *H01M 50/559*(2021.01)i; *H01M 50/56*(2021.01)i;
*H01M 50/562*(2021.01)i; *H01M 50/588*(2021.01)i; *H01M 50/593*(2021.01)i
FI:    H01M50/562; H01M10/052; H01M10/058; H01M50/107; H01M50/109; H01M50/119; H01M50/152; H01M50/153;
          H01M50/159; H01M50/342 101; H01M50/545; H01M50/559; H01M50/56; H01M50/588; H01M50/593

According to International Patent Classification (IPC) or to both national classification and IPC

### B. FIELDS SEARCHED

Minimum documentation searched (classification system followed by classification symbols)

H01M10/052; H01M10/058; H01M50/107; H01M50/109; H01M50/119; H01M50/152; H01M50/153; H01M50/159;
H01M50/342; H01M50/545; H01M50/559; H01M50/56; H01M50/562; H01M50/588; H01M50/593

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2002-184390 A (GS MELCO TECH CO. LTD.) 28 June 2002 (2002-06-28) paragraphs [0015]-[0021], fig. 1-3 | 1, 3, 5-10, 14, 16 |
| A | | 2, 4, 11-13, 15 |
| X | JP 2016-207510 A (HITACHI AUTOMOTIVE SYSTEMS LTD.) 08 December 2016 (2016-12-08) paragraphs [0014]-[0072], fig. 1-10 | 1, 3, 5-8, 11-12, 14, 16 |
| A | | 2, 4, 9-10, 13, 15 |
| A | JP 10-064497 A (SHIN KOBE ELECTRIC MACHINERY CO., LTD.) 06 March 1998 (1998-03-06) | 1-16 |

✓ Further documents are listed in the continuation of Box C.          ✓ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **24 December 2021** | **11 January 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

| International application No. |
|---|
| **PCT/JP2021/038626** |

**C.    DOCUMENTS CONSIDERED TO BE RELEVANT**

| Category* | Citation of document, with indication, where appropriate, of the relevant passages | Relevant to claim No. |
|---|---|---|
| A | JP 10-208710 A (YUASA CORP.) 07 August 1998 (1998-08-07) | 1-16 |
| A | JP 2010-123410 A (NEC TOKIN CORP.) 03 June 2010 (2010-06-03) | 1-16 |
| A | JP 2009-129704 A (HITACHI MAXELL LTD.) 11 June 2009 (2009-06-11) | 1-16 |
| A | US 2016/0268583 A1 (JOHNSON CONTROLS ADVANCED POWER SOLUTIONS GMBH) 15 September 2016 (2016-09-15) | 1-16 |
| P, X | JP 2021-077517 A (TOYOTA MOTOR CORP.) 20 May 2021 (2021-05-20)<br>    claims 1-7, paragraphs [0017]-[0058], fig. 1-5 | 1-14, 16 |

Form PCT/ISA/210 (second sheet) (January 2015)

**INTERNATIONAL SEARCH REPORT**
Information on patent family members

International application No.

**PCT/JP2021/038626**

| Patent document cited in search report | | | Publication date (day/month/year) | Patent family member(s) | | | Publication date (day/month/year) |
|---|---|---|---|---|---|---|---|
| JP | 2002-184390 | A | 28 June 2002 | (Family: none) | | | |
| JP | 2016-207510 | A | 08 December 2016 | (Family: none) | | | |
| JP | 10-064497 | A | 06 March 1998 | (Family: none) | | | |
| JP | 10-208710 | A | 07 August 1998 | (Family: none) | | | |
| JP | 2010-123410 | A | 03 June 2010 | (Family: none) | | | |
| JP | 2009-129704 | A | 11 June 2009 | US | 2009/0136841 | A1 | |
| | | | | CN | 101442111 | A | |
| | | | | KR | 10-2009-0053708 | A | |
| US | 2016/0268583 | A1 | 15 September 2016 | WO | 2015/063037 | A1 | |
| | | | | CN | 105900264 | A | |
| | | | | EP | 3063808 | A1 | |
| JP | 2021-077517 | A | 20 May 2021 | US | 2021/0143387 | A1 | |
| | | | | claims 1-8, paragraphs [0021]-[0085], fig. 1-5 | | | |
| | | | | CN | 112838334 | A | |

Form PCT/ISA/210 (patent family annex) (January 2015)

**EP 4 231 402 A1**

**Patent documents cited in the description**

- JP 2019046639 A
- JP 2020047536 A